(19) **Europäisches Patentamt**

**European Patent Office**

**Office européen des brevets**

(11) **EP 1 423 919 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **02754364.4**

(22) Anmeldetag: **15.07.2002**

(51) Int Cl.:
**H04B 1/707** (2006.01)

(86) Internationale Anmeldenummer:
**PCT/DE2002/002591**

(87) Internationale Veröffentlichungsnummer:
**WO 2003/028238 (03.04.2003 Gazette 2003/14)**

(54) **VORRICHTUNG UND VERFAHREN ZUR FEINSYNCHRONISATION BEI DER ABTASTUNG VON SPREIZKODIERTEN EMPFANGSSIGNALEN**

DEVICE AND METHOD FOR FINE SYNCHRONIZATION ON THE SAMPLING OF SPREAD-CODED RECEIVED SIGNALS

DISPOSITIF ET PROCEDE DE SYNCHRONISATION PRECISE LORS DE L'ECHANTILLONNAGE DE SIGNAUX DE RECEPTION CODES PAR ETALEMENT

(84) Benannte Vertragsstaaten:
**DE FI FR GB IT SE**

(30) Priorität: **03.09.2001 DE 10143154**

(43) Veröffentlichungstag der Anmeldung:
**02.06.2004 Patentblatt 2004/23**

(73) Patentinhaber: **Infineon Technologies AG
81669 München (DE)**

(72) Erfinder: **PAUL, Steffen
82065 Baierbrunn (DE)**

(74) Vertreter: **Lange, Thomas
Patentanwälte
Lambsdorff & Lange
Dingolfinger Strasse 6
81673 München (DE)**

(56) Entgegenhaltungen:
WO-A-99/34528        DE-A- 19 953 350
US-A- 5 640 416

- **FONOLLOSA J R ET AL: "Blind multiuser identification and detection in CDMA systems" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, 9. Mai 1995 (1995-05-09), Seiten 1876-1879, XP010151659 ISBN: 0-7803-2431-5**
- **KOULAKIOTIS D ET AL: "DATA DETECTION TECHNIQUES FOR DS-CDMA MOBILE SYSTEMS: A REVIEW" IEEE PERSONAL COMMUNICATIONS, IEEE COMMUNICATIONS SOCIETY, US, Bd. 7, Nr. 3, Juni 2000 (2000-06), Seiten 24-34, XP000947007 ISSN: 1070-9916**
- **UNGERBOECK G: "ADAPTIVE MAXIMUM-LIKELIHOOD RECEIVER FOR CARRIER-MODULATED DATA-TRANSMISSION SYSTEMS" IEEE TRANSACTIONS ON COMMUNICATIONS, IEEE INC. NEW YORK, US, Bd. COM-22, Nr. 5, 1. Mai 1974 (1974-05-01), Seiten 624-636, XP000670408 ISSN: 0090-6778**

EP 1 423 919 B1

**Beschreibung**

Die Erfindung betrifft eine Vorrichtung sowie ein Verfahren zur Nachführung des optimalen Abtastzeitpunkts für eine Folge empfangener, spreizkodierter Daten in einem Funkempfänger, insbesondere in einem Mobilfunkempfänger.

Bei Mobilfunksystemen der dritten Generation werden als grundsätzliche Empfängerstrukturen Rakeempfänger sowie Multiuserdetektoren eingesetzt. Bei beiden Konzepten kann die Mehrwegeausbreitung des Übertragungskanals so berücksichtigt werden, dass möglichst wenig gesendete Signalenergie ungenutzt bleibt.

Beim Rakeempfänger (von engl. "rake": Rechen) wird eine Fingerstruktur verwendet, bei der jedem Mehrwegepfad des Übertragungskanals ein Empfangsfinger der Fingerstruktur zugeordnet wird. In jedem Finger wird eine der Multipfadkomponenten so zeitverzögert, dass die verschobenen und gewichteten Ausgabesignale der verschiedenen Finger phasenrichtig addiert werden können. Auf diese Weise kann ein möglichst intensives Empfangssignal erhalten werden.

Zur Synchronisation zwischen Sende- und Empfangstakt wird das empfangene Signal in jedem Finger mit der empfängerseitig bekannten Spreizfolge korreliert. Dazu wird im allgemeinen ein sogenannten Früh-/Spät-Korrelator verwendet, welcher den im Empfänger erzeugten Spreizkode einerseits und das Empfangssignal im Finger andererseits für zwei verschiedene Abtastphasen korreliert. Zur Einstellung des optimalen Abtastzeitpunkts wird der Abtastzeitpunkt des Empfangssignals dann so lange verändert, bis der zum Früh-Zeitpunkt ermittelte Korrelationswert und der zum Spät-Zeitpunkt ermittelte Korrelationswert übereinstimmen.

Diese Vorgehensweise setzt eine symmetrische Korrelationsfunktion voraus. Da aber die Signale in den einzelnen Fingern jeweils nur eine Multipfadkomponente beschreiben, so dass der Abtastzeitpunkt in einem bestimmten Finger lediglich für eine bestimmte Multipfadkomponente festgelegt werden muss, erhält man durch Korrelation mit dem empfängerseitig erzeugten Spreizkode eine hinreichend genaue Synchronisation.

Beim Multiuserdetektor dagegen wird das vollständige Empfangssignal einschließlich der Mehrwegekomponenten verarbeitet. Hinsichtlich dieses multipfadverzerrten Empfangssignals muss der Abtastzeitpunkt möglichst genau festgelegt werden. Erst an nachgeordneter Stelle des Signalpfads wird dann eine Kanalschätzung durchgeführt, um das multipfadverzerrte Empfangssignal dann entsprechend dem Ergebnis der Kanalschätzung zu entzerren. Beim Multiuserdetektor wird das entzerrte Empfangssignal anschließend so ausgewertet, dass gleichzeitig mehrere Nutzer detektiert werden können. Während beim Rakeempfänger die Interferenz der von verschiedenen Teilnehmern im gleichen Frequenzband ausgesendeten Signalanteile als unerwünschter Rauschterm unterdrückt wird, werden beim Multiuserdetektor die Empfangssignale von sämtlichen Teilnehmern gemeinsam ausgewertet.

Es hat sich herausgestellt, dass beim Multiuserdetektor eine herkömmliche Früh-/Spät-Korrelation des Empfangssignals mit einer empfängerseitig generierten Spreizfolge nicht für eine hinreichend genaue Festlegung des optimalen Abtastzeitpunkts geeignet ist.

Es ist deshalb Aufgabe der Erfindung, eine Vorrichtung sowie ein Verfahren zur Nachführung des optimalen Abtastzeitpunkts zur Verfügung zu stellen, welche eine Feinsynchronisation bei der Abtastung von empfangenen spreizkodierten Signalen ermöglicht.

Diese Aufgabe der Erfindung wird durch eine Vorrichtung zur Nachführung des optimalen Abtastzeitpunkts gemäß Anspruch 1, durch einen Multipfaddetektor gemäß Anspruch 14, durch eine Mobilfunkstation gemäß Anspruch 15 sowie durch ein Verfahren zur Nachführung des optimalen Abtastzeitpunkts für eine Folge empfangener, spreizkodierter Daten gemäß Anspruch 17 gelöst.

Die erfindungsgemäße Vorrichtung zur Nachführung des optimalen Abtastzeitpunkts für eine Folge empfangener, spreizkodierter Daten eignet sich für den Einsatz in einem Funkempfänger, insbesondere in einem Mobilfunkempfänger. Dabei sind die empfangenen Daten senderseitig mit einer auf Empfängerseite bekannten Spreizfolge spreizkodiert worden. Die Vorrichtung zur Nachführung des optimalen Abtastzeitpunkts umfasst Mittel zur Kanalschätzung, welche anhand einer empfängerseitig bekannten Trainingssequenz die Kanalimpulsantwort des Übertragungskanals ermitteln, sowie Mittel zur Faltung der Kanalimpulsantwort mit der empfängerseitig bekannten Spreizfolge. Darüber hinaus weist die Vorrichtung Mittel zur Früh-/Spät-Korrelation auf, welche die Folge empfangener, spreizkodierter Daten zu einem Früh-Zeitpunkt und zu einem Spät-Zeitpunkt mit der durch Faltung gewonnenen Korrelationsfolge korrelieren. Außerdem weist die Vorrichtung zur Nachführung des optimalen Abtastzeitpunkts Mittel zur Erzeugung eines Nachführsignals auf, welche in Abhängigkeit von der zum Früh-Zeitpunkt und der zum Spät-Zeitpunkt ermittelten Korrelation ein Nachführsignal zur Nachführung des optimalen Abtastzeitpunkts erzeugen.

Infolge der Multipfad-Ausbreitungscharakteristik des Übertragungskanals gelangen verschiedene Signalanteile des Sendesignals auf verschiedenen Wegen zum Empfänger und erfahren dabei verschieden stark ausgeprägte Verzögerungen. Beispielsweise wird ein Signalanteil, der auf direktem Weg zum Empfänger gelangt, weniger stark verzögert sein als ein Signalanteil, der nach einer Reflexion an einer Bergwand zum Empfänger gelangt. Das empfangene Signal besteht aus einer Überlagerung dieser verschieden stark verzögerten Multipfadkomponenten. Würde man dieses verzerrte Empfangssignal mittels eines Früh-/Spät-Korrelators mit der empfängerseitig bekannten, unverzerrten Spreizfolge korrelieren, um so den optimalen Abtastzeitpunkt festzulegen, so würde man bestenfalls ein ungenaues Ergebnis erhalten. Der Früh-/Spät-Korrelator würde nämlich die unverzerrte Spreizfolge mit der durch die Multipfad-Charakteristik des Übertragungskanals verzerrten, spreizkodierten Empfangsfolge vergleichen, und diese beiden Signale weichen bei ausgeprägtem Multipfadverhalten stark voneinander ab. Deshalb kommt es für den Fall, dass die Phase der Spreizfolge der Phase des empfangenen Signals vorauseilt, zu einem anders gearteten Abklingen der Korrelation als für den Fall, dass die Phase der Spreizfolge der Phase der empfangenen Daten hinterherhinkt. Wegen dieser Asymmetrie der Korrelationseigenschaften ermittelt der Früh-/Spät-Korrelator einen fehlerhaften Abtastzeitpunkt für die Empfangsdaten.

In der Schrift DE 199 53 350 A wird zur Nachführung des optimalen Abtastzeitpunktes ein Early/Late-Korrelator mit einer Interpolationseinrichtung verwendet. Hierbei erfolgt jedoch keine Verzerrung der empfängerseitig bekannten Spreizfolge für den Early/Late-Korrelator entsprechend der Kanalimpulsantwort.

Der Erfindung liegt die Erkenntnis zugrunde, dass die unverzerrte Spreizfolge als Korrelationsfolge für das verzerrte spreizkodierte Empfangssignal ungeeignet ist. Bei der erfindungsgemäßen Lösung wird als Korrelationsfolge statt dessen die Folge verwendet, die sich ergeben würde, wenn die unverzerrte Spreizfolge über den Übertragungskanal übertragen und insofern entsprechend der Multipfad-Charakteristik des Übertragungskanals verzerrt würde. Die unverzerrte Spreizfolge muss daher entsprechend der Multipfad-Charakteristik des Übertragungskanals verzerrt werden.

Hierzu führen die Mittel zur Kanalschätzung bereits zu einem frühen Zeitpunkt eine Kanalschätzung durch, bei der eine empfängerseitig bekannte, unverzerrte Trainingssequenz mit der empfangenen, verzerrten Trainingssequenz verglichen wird. Auf diese Weise kann die Kanalimpulsantwort des Übertragungskanals, welche meist als Satz von Kanalkoeffizienten angegeben wird, ermittelt werden. Durch Faltung dieser Kanalimpulsantwort mit der empfängerseitig bekannten, unverzerrten Spreizfolge erhält man rechnerisch eine entsprechend der Multipfad-Charakteristik des Übertragungskanals verzerrte Spreizfolge, welche bei der erfindungsgemäßen Lösung als Korrelationsfolge verwendet wird. Wenn die so gewonnene Korrelationsfolge mit den empfangenen, spreizkodierten Daten korreliert wird, dann erhält man für den Fall einer vorauseilenden Phase der Korrelationsfolge das gleiche Abklingverhalten der Korrelationsantwort wie für den Fall einer hinterherhinkenden Phase der Korrelationsfolge.

Wegen dieser Symmetrie des Abklingverhaltens für positive und negative Phasenverschiebungen eignet sich die erfindungsgemäße Korrelationsfolge besonders gut zur Ermittlung des Punkts maximaler Korrelation, und dieser Punkt kann dann als optimaler Abtastzeitpunkt gewählt werden. Hierzu wird von einem Früh-/Spät-Korrelator die Korrelation der erfindungsgemäßen Korrelationsfolge mit dem Empfangssignal zu einem Früh-Zeitpunkt und zu einem Spät-Zeitpunkt ermittelt. Wenn die so ermittelte Früh-Korrelation mit der Spät-Korrelation übereinstimmt, dann wird der optimale Abtastzeitpunkt genau in die Mitte zwischen den Früh-Zeitpunkt und den Spät-Zeitpunkt gelegt. Wenn dagegen beispielsweise die zum Früh-Zeitpunkt ermittelte Korrelation größer ist als die zum Spät-Zeitpunkt ermittelte Korrelation, dann liegt der optimale Abtastzeitpunkt nicht genau in der Mitte, sondern muss mit Hilfe eines Nachführsignals zu früheren Zeitpunkten hin verschoben werden. Hierzu wird ein Nachführsignal erzeugt, welches den optimalen Abtastzeitpunkt in Abhängigkeit von der zum Früh-Zeitpunkt ermittelten Korrelation und der zum Spät-Zeitpunkt ermittelten Korrelation nachführt.

Mit Hilfe der erfindungsgemäßen Korrelationsfolge, welche durch Faltung der Kanalimpulsantwort mit der empfängerseitig bekannten Spreizfolge gewonnen wird, kann der optimale Abtastzeitpunkt für spreizcodierte Empfangsdaten sehr genau festgelegt und nachgeführt werden. Die exakte Festlegung des Abtastzeitpunkts auf den Punkt maximaler Korrelation verbessert die Zuverlässigkeit beim Datenempfang und führt zu einer Absenkung der Bitfehlerrate. Insbesondere beim Auftreten von Kanalstörungen können Übertragungsfehler durch eine exakte Nachführung des Abtastzeitpunkts vermieden werden.

Es ist von Vorteil, wenn es sich bei der Folge empfangener, spreizkodierter Daten um eine Folge von Basisbandsignalwerten handelt. Bei dieser Ausführungsform der Erfindung wird das Hochfrequenzsignal zunächst auf ein Basisbandsignal der Trägerfrequenz Null heruntergemischt, und erst dann wird der optimale Abtastzeitpunkt ermittelt.

Es ist von Vorteil, wenn es sich bei den Basisbandsignalwerten um komplexe Basisbandsignalwerte handelt, welche jeweils einen Inphasesignalwert sowie einen Quadratursignalwert umfassen. Im Mobilfunkbereich werden die verschiedenen Modulationszustände als Punkte in einem komplexen Zustandsraum angegeben. Das Inphasesignal stellt dabei den Realteil des komplexen Basisbandsignals dar, während das Quadratursignal den Imaginärteil liefert.

Gemäß einer vorteilhaften Ausführungsform der Erfindung liefern die Mittel zur Kanalschätzung die Kanalimpulsantwort des Übertragungskanals als Satz von Kanalkoeffizienten. Zur Ermittlung der einzelnen Kanalkoeffizienten wird die empfangene, verzerrte Trainingssequenz mit der empfängerseitig bekannten, unverzerrten Trainingssequenz jeweils mit verschieden großer Phasenverschiebung korreliert. Jeder Wert der Phasenverschiebung zwischen Empfangssignal und Trainingssequenz liefert als Korrelationsergebnis einen der Kanalkoeffizienten $h_0$, $h_1$, ..., $h_L$. L stellt dabei das sogenannte Kanalgedächtnis dar. Zur Erzeugung der erfindungsgemäßen Korrelationsfolge muss die Kanalimpulsantwort mit der empfängerseitig bekannten Spreizfolge gefaltet werden. Hierzu wird die um $i \cdot \Delta t$ phasenverschobene Spreizfolge mit dem zugehörigen Kanalkoeffizienten hi gewichtet. Für i = 0,1, ..., L werden die gewichteten, phasenverschobenen Spreizfolgen aufaddiert, um so die erfindungsgemäße Korrelationsfolge zu erhalten. Mit Hilfe des Satzes von Kanalkoeffizienten $h_0$, $h_1$, ..., $h_L$ kann die Faltung der Kanalimpulsantwort mit der empfängerseitig bekannten Spreizfolge, welche zur Ermittlung der Korrelationsfolge erforderlich ist, daher auf einfache Weise vorgenommen werden.

Es ist von Vorteil, wenn das Nachführsignal den optimalen Abtastzeitpunkt so nachführt, dass die zum Früh-Zeitpunkt ermittelte Korrelation und die zum Spät-Zeitpunkt ermittelte Korrelation übereinstimmen. Die erfindungsgemäße berechnete Korrelationsfolge weist die gleiche Multipfadverzerrung auf wie das empfangene Signal. Als Folge davon ergibt sich für positive und negative relative Phasenverschiebungen zwischen Korrelationsfolge und Empfangssignal ein symmetrischer Abfall der Korrelation. Wegen dieser Symmetrieeigenschaft kann aus der Übereinstimmung der zum Früh-Zeitpunkt ermittelten Korrelation und der zum Spät-Zeitpunkt ermittelten Korrelation gefolgert werden, dass der Punkt maximaler Korrelation genau in der Mitte zwischen dem Früh-Zeitpunkt und dem Spät-Zeitpunkt liegt. Die Übereinstimmung der Früh-Korrelation und der Spät-Korrelation stellt also ein Kriterium dafür dar, dass der optimale Abtastzeitpunkt eingestellt ist; es ist dann keine weitere Nachführung des Abtastzeitpunkts erforderlich. Wenn dagegen die Früh-Korrelation und die Spät-Korrelation voneinander abweichen, dann erfolgt eine Nachführung des optimalen Abtastzeitpunkts.

Gemäß einer vorteilhaften Ausführungsform der Erfindung wird das Nachführsignal durch Division der zum Früh-Zeitpunkt ermittelten Korrelation und der zum Spät-Zeitpunkt ermittelten Korrelation erzeugt. Durch Division der beiden Korrelationswerte und anschließenden Vergleich des Divisionsergebnisses mit Eins kann schnell ermittelt werden, ob der optimale Abtastzeitpunkt in Richtung des Früh-Zeitpunkts oder in Richtung des Spät-Zeitpunkts nachgeführt werden muss.

Dabei ist es von Vorteil, wenn der optimale Abtastzeitpunkt für den Fall, dass das Ergebnis der Division größer als Eins ist, in eine erste Richtung verschoben wird. Für den Fall, dass das Ergebnis der Division kleiner als Eins ist, wird der optimale Abtastzeitpunkt in die zur ersten Richtung entgegengesetzte Richtung verschoben. Die Richtung der Verschiebung ergibt sich also daraus, ob das Divisionsergebnis größer oder kleiner als Eins ist. Dabei muss die Nachführung des optimalen Abtastzeitpunkts jeweils in Richtung des größeren Korrelationswerts erfolgen. Wenn also die Früh-Korrelation größer ist als die Spät-Korrelation, dann muss der optimale Abtastzeitpunkt in Richtung der Früh-Korrelation verschoben werden. Aus dem Divisionsergebnis kann auch die Größe der erforderlichen Nachführung erschlossen werden, so dass sich sowohl Höhe als auch Richtung des Nachführsignals aus dem Divisionsergebnis ableiten lassen. Dies ermöglicht eine exakte und schnelle Nachführung des optimalen Abtastzeitpunkts auch dann, wenn die Übertragungsbedingungen kurzfristigen Schwänkungen unterworfen sind.

Gemäß einer alternativen Ausführungsform der Erfindung wird das Nachführsignal durch Subtraktion der zum Früh-Zeitpunkt ermittelten Korrelation und der zum Spät-Zeitpunkt ermittelten Korrelation erzeugt. Dabei ist es von Vorteil, wenn der optimale Abtastzeitpunkt für den Fall, dass das Ergebnis der Subtraktion größer als Null ist, in eine erste Richtung verschoben wird. Wenn das Ergebnis der Subtraktion dagegen kleiner als Null ist, dann wird der optimale Abtastzeitpunkt in die zur ersten Richtung entgegengesetzte Richtung verschoben. Bei dieser Ausführungsform wird die Richtung, in die der optimale Abtastzeitpunkt verschoben wird, durch das Subtraktionsergebnis festgelegt, wobei die Nachführung in Richtung des größeren der beiden Korrelationsergebnisse erfolgen muss. Durch Vorzeichen und Betrag des Subtraktionsergebnisses wird die Höhe und die Richtung des Nachführsignals festgelegt. Auch diese Lösung ermöglicht eine exakte und schnelle Nachführung des optimalen Abtastzeitpunkts.

Es ist von Vorteil, wenn der Früh-Zeitpunkt gegenüber dem aktuellen Abtastzeitpunkt um etwa eine halbe Chipzeitdauer vorverlagert ist, und wenn der Spät-Zeitpunkt gegenüber dem aktuellen Abtastzeitpunkt um etwa eine halbe Chipzeitdauer nachgeführt ist. Eine Spreizfolge besteht aus einer Folge von Chips, welche die Werte -1 oder 1 annehmen können. Der zeitliche Abstand zwischen zwei aufeinanderfolgend übertragenen Chips wird als Chipzeitdauer $T_C$ bezeichnet.

Es hat sich herausgestellt, dass die zu einem Früh-Zeitpunkt, welcher gegenüber dem aktuellen Abtastzeitpunkt um etwa eine halbe Chipzeitdauer vorverlagert ist, ermittelte Korrelation gegenüber der maximalen Korrelation bereits deutlich verringert ist, dass bei einer derartigen Festlegung des Früh-Zeitpunkts aber bereits eine signifikante Korrelation messbar ist. Dasselbe gilt für die zum Spät-Zeitpunkt ermittelte Korrelation, wenn der Spät-Zeitpunkt gegenüber dem aktuellen Abtastzeitpunkt um etwa eine halbe Chipzeitdauer nachgeführt ist. Auch hier ergibt sich eine Korrelation, die zwischen Null und dem maximalen Korrelationswert liegt und die sich gut für die Ermittlung der Früh-/Spät-Korrelation eignet.

Es ist von Vorteil, wenn es sich bei dem Abtastzeitpunkt, mit dem die empfangenen, spreizkodierten Daten abgetastet werden, um einen verschieblichen Abtastzeitpunkt handelt, welcher zur Einstellung optimaler Abtastbedingungen dem Nachführsignal entsprechend nachgeführt wird. Die empfangenen Daten werden jeweils zu einem bestimmten Abtastzeitpunkt ausgelesen und dann der erfindungsgemäßen Vorrichtung zur Nachführung des optimalen Abtastzeitpunkts zugeführt, welche ein Nachführsignal für den optimalen Abtastzeitpunkt erzeugt. Entsprechend diesem Nachführsignal wird der tatsächliche Abtastzeitpunkt so verschoben, dass sich als neuer Abtastzeitpunkt der optimale Abtastzeitpunkt ergibt. Hierzu wird das Nachführsignal der Einheit zur Abtastung der empfangenen Daten zugeführt und bewirkt dort eine entsprechende Verschiebung des tatsächlichen Abtastzeitpunkts. Der Vorteil dieser Ausführungsform ist, dass sie auf einfache Weise mit nur geringem Schaltungsaufwand realisiert werden kann.

Alternativ dazu ist es von Vorteil, wenn die Vorrichtung zur Nachführung des optimalen Abtastzeitpunkts eine Einheit zur linearen Interpolation der empfangenen, spreizkodierten Daten aufweist, welche mittels linearer Interpolation zwischen aufeinanderfolgenden Datenwerten der Folge eine neue Folge von zum nachgeführten optimalen Abtastzeitpunkt abgetasteten Datenwerten erzeugt. Bei dieser Ausführungsform der Erfindung werden die empfangenen Daten stets zum gleichen Abtastzeitpunkt abgetastet; der Abtastzeitpunkt ist also nicht verschieblich. Da dieser Abtastzeitpunkt jedoch in der Regel noch nicht dem optimalen Abtastzeitpunkt entspricht, ist eine Einheit zur linearen Interpolation der empfangenen Daten vorgesehen, welche eine Interpolation zwischen aufeinanderfolgenden Abtastwerten vornimmt und auf diese Weise rechnerisch eine neue Folge von abgetasteten Datenwerten erzeugt. Die Berechnung der Folgenwerte der neuen Folge erfolgt dabei so, als wenn die Folgenwerte zum nachgeführten optimalen Abtastzeitpunkt abgetastet worden wären. Durch diese rechnerische Verschiebung des Abtastzeitpunkts mittels linearer Interpolation zwischen aufeinanderfolgenden Datenwerten ist es nicht nötig, den tatsächlichen Abtastzeitpunkt zu verschieben. Die empfangenen, spreizcodierten Daten können daher weiter zum gleichen Abtastzeitpunkt abgetastet werden, auch wenn dieser fixe Abtastzeitpunkt in der Regel nicht mit dem nachgeführten optimalen Abtastzeitpunkt zusammenfällt. Die Nachführung des optimalen Abtastzeitpunkts wird dann rechnerisch mittels linearer Interpolation durchgeführt. Dadurch, dass der tatsächliche Abtastzeitpunkt nicht als verschieblicher Abtastzeitpunkt ausgestaltet sein muss, ergibt sich eine stabilere und robustere Lösung.

Dabei ist es von Vorteil, wenn die Einheit zur linearen Interpolation der empfangenen, spreizkodierten Daten die neue Folge von zum nachgeführten optimalen Abtastzeitpunkt abgetasteten Datenwerten dem Nachführsignal entsprechend erzeugt, wobei durch das Nachführsignal die Gewichtungen festgelegt werden, mit denen die empfangenen, spreizkodierten Daten zu den Datenwerten der neuen Folge linearkombiniert werden. Wenn durch das Nachführsignal der optimale Abtastzeitpunkt rechnerisch verschoben werden soll, so müssen dazu die Gewichtungen verändert werden, mit denen die abgetasteten Datenwerte zu den Datenwerten der neuen Folge linearkombiniert werden.

Die rein rechnerische Ermittlung der neuen Folge von zum nachgeführten optimalen Abtastzeitpunkt abgetasteten Datenwerten ermöglicht eine schnelle Nachführung des optimalen Abtastzeitpunkts, weil das Nachführsignal sehr schnell in eine entsprechende Änderung der Interpolationsvorschrift für die Erzeugung der neuen Datenwerte umgesetzt werden kann. Dadurch ist eine schnelle und genaue Nachregelung des optimalen Abtastzeitpunkts möglich, ohne dass hierzu eine veränderung der hardwaremäßigen Abtastung des Empfangssignals vorgenommen werden müsste.

Es ist von Vorteil, wenn die erfindungsgemäße Vorrichtung zur Nachführung des optimalen Abtastzeitpunkts für eine Folge empfangener, spreizkodierter Daten in einem Multiuserdetektor eingesetzt wird. In einem Multiuserdetektor wird das durch die Multipfad-Übertragungscharakteristik verzerrte Empfangssignal abgetastet und ausgewertet. Zur Nachregelung des optimalen Abtastzeitpunkts wird ein Früh-/Spät-Korrelator eingesetzt, der das empfangene Signal zu einem Früh-Zeitpunkt und zu einem Spät-Zeitpunkt mit einer geeigneten Korrelationsfolge korreliert. Um den optimalen Abtastzeitpunkt mit ausreichender Genauigkeit einstellen zu können, muss eine Korrelationsfolge gewählt werden, die ebenfalls die durch den Übertragungskanal bewirkte Multipfad-Verzerrung aufweist. Eine derartige Korrelationsfolge kann durch Faltung der Kanalimpulsantwort mit der empfängerseitig bekannten Spreizfolge erzeugt werden. Dadurch wird eine Feinsynchronisation des optimalen Abtastzeitpunkts in einem Multiuserdetektor möglich.

Die erfindungsgemäße Vorrichtung zur Nachführung des optimalen Abtastzeitpunkts eignet sich für den Einsatz in einer Mobilfunkstation, und insbesondere für den Einsatz in einer Mobilfunkstation, bei der als Standard für die Datenübertragung der Standard UMTS verwendet wird. Bei UMTS handelt es sich um den Standard für die CDMA-Übertragung (CDMA: Code Division Multiple Access). Bei diesem Standard werden die verschiedenen logischen Übertragungskanäle mit verschiedenen Spreizfolgen kodiert, um sie im Empfänger unterscheiden und auswerten zu können.

Bei dem erfindungsgemäßen Verfahren zur Nachführung des optimalen Abtastzeitpunkts für eine Folge empfangener, spreizkodierter Daten in einem (Mobil-)Funkempfänger, wobei die empfangenen Daten senderseitig mit einer auf Empfängerseite bekannten Spreizfolge spreizkodiert worden sind, wird in einem ersten Schritt eine Kanalschätzung zur Ermittlung der Kanalimpulsantwort des Übertragungskanals durchgeführt. Diese Kanalschätzung wird mit Hilfe einer empfängerseitig bekannten Trainingssequenz durchgeführt. Zur Erzeugung einer Korrelationsfolge wird die ermittelte Kanalimpulsantwort anschließend mit der empfängerseitig bekannten Spreizfolge gefaltet. Die Folge empfangener Daten wird mit der erzeugten Korrelationsfolge zu einem Früh-Zeitpunkt und zu einem Spät-Zeitpunkt korreliert, und anschließend wird ein Nachführsignal zur Nachführung des optimalen Abtastzeitpunkts in Abhängigkeit von der zum Früh-Zeitpunkt ermittelten Korrelation und der zum Spät-Zeitpunkt ermittelten Korrelation erzeugt.

Anstatt das Empfangssignal wie bisher im Stand der Technik mit der unverzerrten Spreizfolge zu korrelieren, wird bei dem erfindungsgemäßen Verfahren eine entsprechend der Übertragungscharakteristik des Mobilfunkkanals verzerrte Korrelationsfolge erzeugt, indem die empfängerseitig bekannte, unverzerrte Spreizfolge mit der durch Kanalschätzung ermittelten Kanalimpulsantwort gefaltet wird. Bei Korrelation der so erzeugten Korrelationsfolge mit den Empfangsdaten ergibt sich für gegenüber den Empfangsdaten vorauseilende und hinterherhinkende Korrelationsfolgen ein symmetrischer Korrelationsabfall. Diese Eigenschaft ermöglicht bei Verwendung eines Früh-/Spät-Korrelators eine exakte Festlegung des optimalen Abtastzeitpunkts, welcher genau mittig zwischen den Früh-Zeitpunkt und den Spät-Zeitpunkt gelegt wird. Der Früh-Zeitpunkt, der optimale Abtastzeitpunkt und der Spät-Zeitpunkt werden so nachgeführt, dass die zum Früh-Zeitpunkt ermittelte Korrelation mit der zum Spät-Zeitpunkt ermittelten Korrelation übereinstimmt. Dann ist der optimale Abtastzeitpunkt gefunden.

Nachfolgend wird die Erfindung anhand eines in der Zeichnung dargestellten Ausführungsbeispiels weiter beschrieben. Es zeigen:

Fig. 1 ein Blockschaltbild der erfindungsgemäßen Synchronisationseinheit zur Festlegung des optimalen Abtastzeitpunkts;

Fig. 2 die Struktur eines Datenbursts, welcher eine Trainingssequenz umfasst; sowie

Fig. 3 ein Schaubild, aus dem hervorgeht, auf welche Weise der Früh-/Spät-Korrelator das Nachführsignal zur Nachführung des optimalen Abtastzeitpunkts erzeugt.

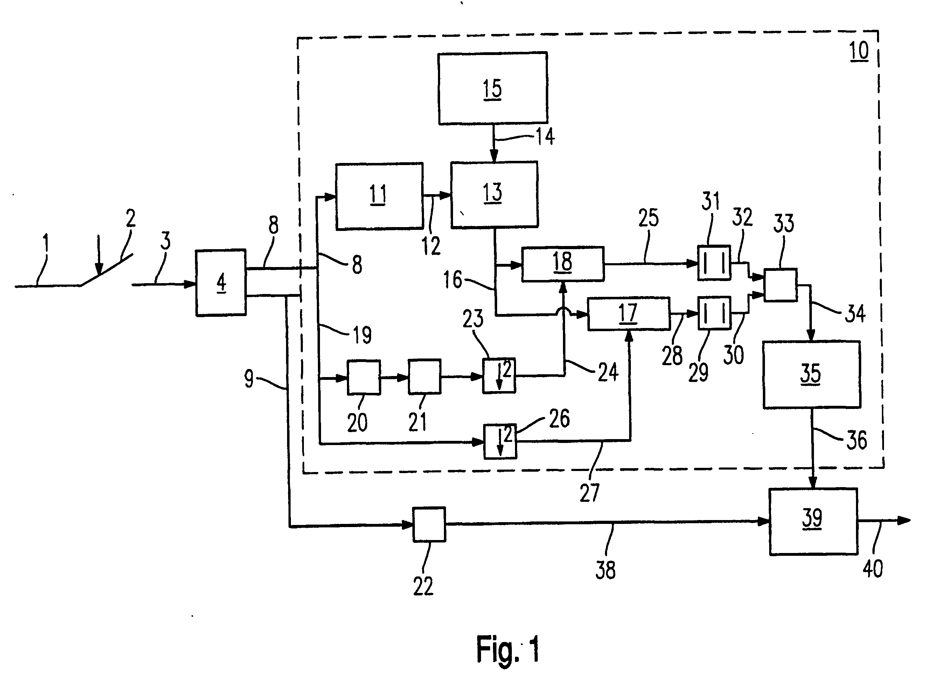

Fig. 1 zeigt das Blockschaltbild der erfindungsgemäßen Vorrichtung zur Nachführung des optimalen Abtastzeitpunkts für ein Empfangssignal in einem Funkempfänger, und insbesondere in einem Mobilfunkempfänger. Zur Unterscheidung und Erkennung der verschiedenen logischen Übertragungskanäle werden Spreizfolgen verwendet, mit denen die übertragenen Daten senderseitig spreizkodiert werden. Jeder Spreizkode besteht aus einer Abfolge von Chips, welche entweder den Wert -1 oder den Wert +1 haben. Der zeitliche Abstand zwischen zwei aufeinanderfolgend übertragenen Chips wird als Chipzeitdauer $T_C$ bezeichnet.

Im Empfänger wird das hochfrequente Empfangssignal zunächst in das Basisband heruntergemischt. Auf diese Weise erhält man das spreizkodierte Basisbandsignal 1, das der Einheit 2 zur Abtastung der empfangenen Daten zugeführt wird. Die Einheit 2 zur Abtastung der empfangenen Daten führt eine zweifache Überabtastung des spreizkodierten Basisbandsignals 1 durch; so dass der zeitliche Abstand zwischen aufeinanderfolgenden Abtastpulsen $\frac{T_C}{2}$ beträgt. Der so erhaltene, zweifach überabgetastete Datenstrom 3 wird der Einheit 4 zur Datenstromaufteilung zugeführt.

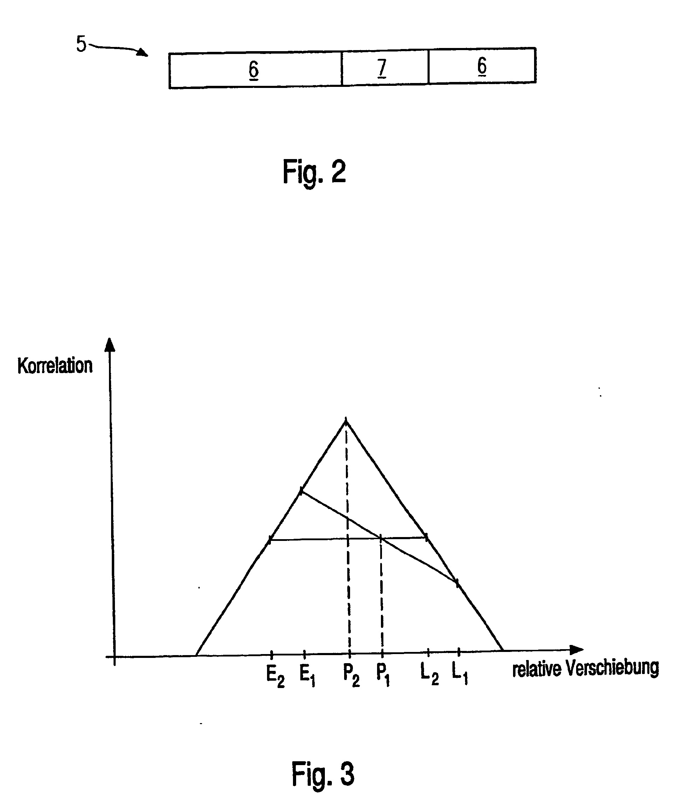

Wie anhand von Fig. 2 erkannt werden kann, umfasst ein Datenburst 5 neben den eigentlichen Nutzdaten 6 auch eine Trainingssequenz 7, die auf der Empfängerseite bekannt ist und die eine Beurteilung der Übertragungscharakteristik des Kanals ermöglicht. Die Einheit 4 zur Datenstromaufteilung teilt den zweifach überabgetasteten Datenstrom 3 in die zweifach überabgetastete Trainingssequenz 8 sowie in den zweifach überabgetasteten Nutzdatenstrom 9 auf. Beide Datenströme werden der Einheit 10 zur Nachführung des optimalen Abtastzeitpunkts zugeführt.

Dem Kanalschätzer 11 steht sowohl die unverzerrte Trainingssequenz als auch die zweifach überabgetastete Trainingssequenz 8 zur Verfügung. Die zweifach überabgetastete Trainingssequenz 8 ist entsprechend der Multipfadcharakteristik des Übertragungskanals verzerrt. Der Kanalschätzer 11 korreliert die verzerrte Trainingssequenz 8 wiederholt mit der bekannten unverzerrten Trainingssequenz, wobei die relative Phasenlage zwischen der verzerrten und der unverzerrten Trainingssequenz variiert wird. Die verschiedenen Korrelationsergebnisse ergeben zusammen die Kanalimpulsantwort 12, die meist als Satz von Kanalkoeffizienten $h_0$, $h_1$, ... , $h_L$ zur Verfügung gestellt wird. Die Kanalkoeffizienten $h_0$, $h_1$, ..., $h_L$ beschreiben das Multipfad-Übertragungsverhalten des Kanals, wobei $h_0$ den Anteil der am wenigsten verzögerten Multipfadkomponente angibt, und wobei $h_L$ den Anteil der am stärksten verzögerten Multipfadkomponente angibt. Der Kanalschätzer 11 stellt der Faltungseinheit 13 die Kanalimpulsantwort 12 zur Verfügung. Die empfängerseitig bekannte, unverzerrte Spreizfolge 14 wird von der Faltungseinheit 13 aus dem Speicher 15 für den Spreizkode ausgelesen. Die Faltungseinheit 13 führt eine Faltung der Kanalimpulsantwort 12 mit der unverzerrten Spreizfolge 14 durch und erzeugt auf diese Weise die Korrelationsfolge 16, die dem Früh-Korrelator 17 sowie dem Spät-Korrelator 18 zugeführt wird.

Zur Erzeugung des Spät-Signals wird der Datenstrom 19 durch die beiden Verzögerungsglieder 20 und 21 verzögert, wobei jedes Verzögerungsglied eine Verzögerung um $\frac{T_C}{2}$ bewirkt. Insgesamt wird der Datenstrom 19 durch die beiden Verzögerungsglieder 20 und 21 daher um eine Chipzeitdauer $T_C$ verzögert. Da das eigentliche Nutzsignal, der zweifach überabgetastete Nutzdatenstrom 9, durch das Verzögerungsglied 22 um eine halbe Chipzeitdauer verzögert wird, hinkt das Spätsignal dem eigentlichen Nutzsignal um $\frac{T_C}{2}$ hinterher.

In der Einheit 23 zur Reduzierung der Abtastrate wird die Abtastrate des Spätsignals halbiert. Die am Ausgang der Einheit 23 zur Reduzierung der Abtastrate abgreifbare, um $\frac{T_C}{2}$ verspätete Datenfolge 24 wird dem Spät-Korrelator 18 zugeführt, der die Korrelation zwischen der um $\frac{T_C}{2}$ verspäteten Datenfolge 24 und der Korrelationsfolge 16 berechnet. Diese für den Spät-Zeitpunkt ermittelte Korrelation wird als Korrelationssignal 25 ausgegeben.

Zur Erzeugung des Früh-Signals wird die Abtastrate des Datenstroms 19 durch die Einheit 26 zur Reduzierung der Abtastrate halbiert. Das Frühsignal durchläuft keine Verzögerungsglieder. Da der Nutzdatenstrom 9 durch das Verzögerungsglied 22 um $\frac{T_C}{2}$ verzögert ist, erhält man ein gegenüber dem Nutzdatenstrom um $\frac{T_C}{2}$ vorauseilendes Früh-Signal. Am Ausgang der Einheit 26 zur Reduzierung der Abtastrate kann die um $\frac{T_C}{2}$ verfrühte Datenfolge 27 abgegriffen werden, die im Früh-Korrelator 17 mit der Korrelationsfolge 16 korreliert wird. Auf diese Weise erhält man die Korrelation zum Früh-Zeitpunkt, die als Korrelationssignal 28 der Einheit 29 zur Bestimmung des Betrags der Frühkorrelation zugeführt wird, die den Betrag 30 der Früh-Korrelation bestimmt. Entsprechend wird ausgehend vom Korrelationssignal 25 durch die Einheit 31 zur Bestimmung des Betrags der Spät-Korrelation der Betrag 32 der Spät-Korrelation ermittelt.

Im Dividierer 33 wird der Betrag der Spät-Korrelation durch den Betrag der Früh-Korrelation geteilt. Das Divisionsergebnis 34, welches größer als Eins, gleich Eins oder kleiner als Eins sein kann, wird durch die Einheit 35 zur Berechnung des Nachführsignals in ein Nachführsignal 36 für den Abtastzeitpunkt umgesetzt.

Wenn der Betrag der Spät-Korrelation kleiner ist als der Betrag der Früh-Korrelation ist, dann liefert der Dividierer 33 ein Divisionsergebnis, das kleiner ist als Eins. Dieser Fall ist in Fig. 3 dargestellt. Fig. 3 zeigt die Korrelation als Funktion der relativen Verschiebung zwischen Empfangssignal und Korrelationsfolge. Zunächst ist der Betrag der Früh-Korrelation, die zum Früh-Zeitpunkt $E_1$ ermittelt wird, höher als der Betrag der Spät-Korrelation, welche zum Spät-Zeitpunkt $L_1$ ermittelt wird.

Anhand von Fig. 3 kann erkannt werden, dass die Abtastung zum Abtastzeitpunkt $P_1$, welcher genau in der Mitte zwischen dem Früh-Zeitpunkt $E_1$ und dem Spät-Zeitpunkt $L_1$ liegt, jeweils zu spät erfolgt. Bei einem Divisionsergebnis kleiner als Eins muss das Nachführsignal 36 daher so gewählt werden, dass der Abtastzeitpunkt zu einem früheren Zeitpunkt hin verschoben wird. Der optimale Abtastzeitpunkt $P_2$, welcher immer genau mittig zwischen dem zugehörigen Früh-Zeitpunkt $E_2$ und dem zugehörigen Spät-Zeitpunkt $L_2$ liegt, ist dann erreicht, wenn der zum Früh-Zeitpunkt $E_2$ ermittelte Korrelationswert und der zum Spät-Zeitpunkt $L_2$ ermittelte Korrelationswert übereinstimmen. Die Abtastung zum Zeitpunkt $P_2$ erfolgt dann jeweils genau zu dem Zeitpunkt, zu dem die Korrelation zwischen Empfangssignal und Korrelationsfolge maximal ist. Wenn dieser optimale Abtastzeitpunkt erreicht ist, erfolgt keine weitere Nachführung des Abtastzeitpunkts mehr.

Für den Fall, dass der Betrag der Spät-Korrelation zunächst größer ist als der Betrag der Früh-Korrelation, ergibt sich ein Divisionsergebnis, welches größer ist als Eins. In diesem Fall muss die Nachführung in umgekehrter Richtung erfolgen. Das Nachführsignal 36 müsste hier so gewählt werden, dass der Abtastzeitpunkt zu einem späteren Zeitpunkt hin verschoben wird. Die Nachführung des Abtastzeitpunkts ist genau wie im oben diskutierten Fall dann beendet, wenn der zum Früh-Zeitpunkt ermittelte Korrelationswert und der zum Spät-Zeitpunkt ermittelte Korrelationswert übereinstimmen.

Bei der in Fig. 1 gezeigten Ausführungsform durchläuft der zweifach überabgetastete Nutzdatenstrom 9 ein Verzögerungsglied 22, welches eine Verzögerung um $\frac{T_C}{2}$ bewirkt. Am Ausgang des Verzögerungsglieds 22 kann ein Nutzdatenstrom 38 abgegriffen werden, und dieser Nutzdatenstrom 38 liegt am Eingang der Einheit 39 zur linearen Interpolation der Abtastwerte an. Die Einheit 39 zur linearen Interpolation der Abtastwerte berechnet jeweils eine Linearkombination aus zwei aufeinanderfolgenden Datenwerten des Nutzdatenstroms 38 und erzeugt so eine neue Folge von Datenwerten, deren Abtastzeitpunkt durch die Interpolationsvorschrift bzw. durch die Gewichtung der einzelnen Datenwerte des Nutzdatenstroms 38 festgelegt wird. Durch Veränderung der Interpolationsvorschrift kann dieser "virtuelle" Abtastzeitpunkt verschoben werden, ohne dass hierzu der tatsächliche Abtastzeitpunkt, mit dem die Einheit 2 zur Abtastung der empfangenen Daten das Basisbandsignal 1 abtastet, verändert werden müsste.

Entsprechend dem Nachführsignal 36 wird die lineare Interpolation der Datenwerte des Nutzdatenstroms 38 so durchgeführt, dass sich eine neue Folge von zum optimalen Abtastzeitpunkt abgetasteten Empfangssignalwerten ergibt. Dieses optimal abgetastete Empfangssignal 40 liegt am Ausgang der Einheit 39 zur linearen Interpolation der Abtastwerte an.

**Patentansprüche**

1. Vorrichtung zur Nachführung des optimalen Abtastzeitpunkts für eine Folge empfangener, spreizkodierter Daten in einem Funkempfänger, insbesondere in einem Mobilfunkempfänger, wobei die empfangenen Daten senderseitig mit einer auf Empfängerseite bekannten Spreizfolge spreizkodiert worden sind, mit

   - Mitteln zur Kanalschätzung (11), welche anhand einer empfängerseitig bekannten Trainingssequenz die Kanalimpulsantwort (12) des Übertragungskanals ermitteln,
   - Mitteln zur Faltung (13) der Kanalimpulsantwort (12) mit der empfängerseitig bekannten Spreizfolge (14),
   - Mitteln zur Früh-/Spät-Korrelation (17, 18), welche die Folge empfangener, spreizkodierter Daten zu einem Früh-Zeitpunkt und zu einem Spät-Zeitpunkt mit der durch Faltung gewonnenen Korrelationsfolge (16) korrelieren, sowie
   - Mitteln zur Erzeugung eines Nachführsignals (33, 35), welche in Abhängigkeit von der zum Früh-Zeitpunkt und der zum Spät-Zeitpunkt ermittelten Korrelation ein Nachführsignal (36) zur Nachführung des optimalen Abtastzeitpunkts erzeugen.

2. Vorrichtung nach Anspruch 1,
   **dadurch gekennzeichnet, dass**
   es sich bei der Folge empfangener, spreizkodierter Daten um eine Folge von Basisbandsignalwerten handelt.

3. Vorrichtung nach Anspruch 2,
   **dadurch gekennzeichnet, dass**
   es sich bei den Basisbandsignalwerten um komplexe Basisbandsignalwerte handelt, welche jeweils einen Inphasesignalwert sowie einen Quadratursignalwert umfassen.

4. Vorrichtung nach einem der vorhergehenden Ansprüche,
   **dadurch gekennzeichnet, dass**
   die Mittel zur Kanalschätzung (11) die Kanalimpulsantwort (12) des Übertragungskanals als Satz von Kanalkoeffizienten ($h_0$, $h_1$, ... $h_L$) liefern.

5. Vorrichtung nach einem der vorhergehenden Ansprüche,
   **dadurch gekennzeichnet, dass**
   das Nachführsignal (36) den optimalen Abtastzeitpunkt so nachführt, dass die zum Früh-Zeitpunkt ermittelte Korrelation und die zum Spät-Zeitpunkt ermittelte Korrelation übereinstimmen.

6. Vorrichtung nach einem der vorhergehenden Ansprüche,
   **dadurch gekennzeichnet, dass**
   die Mittel zur Erzeugung des Nachführsignals (33, 35) das Nachführsignal (36) durch Division der zum Früh-Zeitpunkt ermittelten Korrelation und der zum Spät-Zeitpunkt ermittelten Korrelation erzeugen.

7. Vorrichtung nach Anspruch 6,
   **dadurch gekennzeichnet, dass**
   der optimale Abtastzeitpunkt für den Fall, dass das Ergebnis (34) der Division größer als Eins ist, in eine erste Richtung verschoben wird, und dass der optimale Abtastzeitpunkt für den Fall, dass das Ergebnis (34) der Division kleiner als Eins ist, in die zur ersten Richtung entgegengesetzte Richtung verschoben wird.

8. Vorrichtung nach einem der Ansprüche 1 bis 5,
   **dadurch gekennzeichnet, dass**
   die Mittel zur Erzeugung des Nachführsignals das Nachführsignal durch Subtraktion der zum Früh-Zeitpunkt ermittelten Korrelation und der zum Spät-Zeitpunkt ermittelten Korrelation erzeugen.

9. Vorrichtung nach Anspruch 8,
   **dadurch gekennzeichnet, dass**
   der optimale Abtastzeitpunkt für den Fall, dass das Ergebnis der Subtraktion größer als Null ist, in eine erste Richtung verschoben wird und dass der optimale Abtastzeitpunkt für den Fall, dass das Ergebnis der Subtraktion kleiner als Null ist, in die zur ersten Richtung entgegengesetzte Richtung verschoben wird.

10. Vorrichtung nach einem der vorhergehenden Ansprüche,
   **dadurch gekennzeichnet, dass**
   der Früh-Zeitpunkt gegenüber dem aktuellen Abtastzeitpunkt um eine halbe Chipzeitdauer ($\frac{T_C}{2}$) vorverlagert ist, und dass der Spät-Zeitpunkt gegenüber dem aktuellen Abtastzeitpunkt um eine halbe Chipzeitdauer ($\frac{T_C}{2}$) nachgeführt ist.

11. Vorrichtung nach einem der vorhergehenden Ansprüche,
   **dadurch gekennzeichnet, dass**
   es sich bei dem Abtastzeitpunkt, mit dem die empfangenen, spreizkodierten Daten abgetastet werden, um einen verschieblichen Abtastzeitpunkt handelt, welcher zur Einstellung optimaler Abtastbedingungen dem Nachführsignal (36) entsprechend nachgeführt wird.

12. Vorrichtung nach einem der Ansprüche 1 bis 10,

**dadurch gekennzeichnet, dass**
die Vorrichtung zur Nachführung des optimalen Abtastzeitpunkts eine Einheit (39) zur linearen Interpolation einer Folge von überabgetasteten Datenwerten (38) der empfangenen, spreizkodierten Daten aufweist, welche mittels linearer Interpolation zwischen aufeinanderfolgenden Datenwerten der Folge von überabgetasteten Datenwerten (38) eine neue Folge (40) von zum nachgeführten optimalen Abtastzeitpunkt abgetasteten Datenwerten erzeugt.

13. Vorrichtung nach Anspruch 12,
**dadurch gekennzeichnet, dass**
die Einheit (39) zur linearen Interpolation der empfangenen, spreizkodierten Daten die neue Folge (40) von zum nachgeführten optimalen Abtastzeitpunkt abgetasteten Datenwerten dem Nachführsignal (36) entsprechend erzeugt, wobei durch das Nachführsignal (36) die Gewichtungen festgelegt werden, mit denen die empfangenen, spreizkodierten Daten zu den Datenwerten der neuen Folge (40) linearkombiniert werden.

14. Multiuserdetektor, welcher eine Vorrichtung gemäß einem der Ansprüche 1 bis 13 aufweist.

15. Mobilfunkstation, welche eine Vorrichtung gemäß einem der Ansprüche 1 bis 13 aufweist.

16. Mobilfunkstation nach Anspruch 15,
**dadurch gekennzeichnet, dass**
als Standard für die Datenübertragung der Standard UMTS verwendet wird.

17. Verfahren zur Nachführung des optimalen Abtastzeitpunkts für eine Folge empfangener, spreizkodierter Daten in einem Funkempfänger, insbesondere in einem Mobilfunkempfänger, wobei die empfangenen Daten senderseitig mit einer auf Empfängerseite bekannten Spreizfolge spreizkodiert worden sind,
**gekennzeichnet durch** folgende Schritte:

a) Durchführen einer Kanalschätzung zur Ermittlung der Kanalimpulsantwort (12) des Übertragungskanals mit Hilfe einer empfängerseitig bekannten Trainingsequenz;
b) Falten der in Schritt a) ermittelten Kanalimpulsantwort (12) mit der empfängerseitig bekannten Spreizfolge (14) zur Erzeugung einer Korrelationsfolge (16);
c) Korrelieren der Folge empfangener Daten mit der in Schritt b) erzeugten Korrelationsfolge (16) zu einem Früh-Zeitpunkt und zu einem Spät-Zeitpunkt;
d) Erzeugen eines Nachführsignals (36) zur Nachführung des optimalen Abtastzeitpunkts in Abhängigkeit von der zum Früh-Zeitpunkt ermittelten Korrelation und der zum Spät-Zeitpunkt ermittelten Korrelation.

18. Verfahren nach Anspruch 17,
**dadurch gekennzeichnet, dass**
bei der Kanalschätzung die Kanalimpulsantwort (12) des Übertragungskanals als Satz von Kanalkoeffizienten ($h_0$, $h_1$, ... $h_L$) ermittelt wird.

19. Verfahren nach Anspruch 17 oder Anspruch 18,
**dadurch gekennzeichnet, dass**
das Nachführsignal (36) zur Nachführung des optimalen Abtastzeitpunkts durch Division der zum Früh-Zeitpunkt ermittelten Korrelation und der zum Spät-Zeitpunkt ermittelten Korrelation erzeugt wird.

20. Verfahren nach Anspruch 17 oder Anspruch 18,
**dadurch gekennzeichnet, dass**
das Nachführsignal zur Nachführung des optimalen Abtastzeitpunkts durch Subtraktion der zum Früh-Zeitpunkt ermittelten Korrelation und der zum Spät-Zeitpunkt ermittelten Korrelation erzeugt wird.

21. Verfahren nach einem der Ansprüche 17 bis 20,
**dadurch gekennzeichnet, dass**
der Früh-Zeitpunkt gegenüber dem aktuellen Abtastzeitpunkt um eine halbe Chipzeitdauer $(\frac{T_C}{2})$ vorverlagert ist, und dass der Spät-Zeitpunkt gegenüber dem aktuellen Abtastzeitpunkt um eine halbe Chipzeitdauer $(\frac{T_C}{2})$ nachgeführt ist.

22. Verfahren nach einem der Ansprüche 17 bis 21,
**dadurch gekennzeichnet, dass**
der Abtastzeitpunkt, mit dem die empfangenen spreizkodierten Daten abgetastet werden, zur Einstellung optimaler Abtastbedingungen dem Nachführsignal (36) entsprechend verschoben wird.

23. Verfahren nach einem der Ansprüche 17 bis 21,
**dadurch gekennzeichnet, dass**
mittels linearer Interpolation zwischen aufeinanderfolgenden Datenwerten der Folge (38) empfangener, spreizkodierter Daten eine neue Folge (40) von zum nachgeführten optimalen Abtastzeitpunkt abgetasteten Datenwerten erzeugt wird.

**Claims**

1. Apparatus for tracking the optimum sampling time for a series of received, spread-coded data in a radio receiver, particularly in a mobile radio receiver, where the received data have been spread-coded at the transmitter end using a spreading sequence which is known at the receiver end, having

- means for channel estimation (11) which use a training sequence known at the receiver end to ascertain the channel impulse response (12) for the transmission channel,
- means for convoluting (13) the channel impulse response (12) with the spreading sequence (14) known at the receiver end,
- means for early/late correlation (17, 18) which correlate the series of received, spread-coded data at an early time and at a late time with the correlation sequence (16) obtained by convolution, and also,
- means for generating a tracking signal (33, 35), which take the correlation ascertained at the early time and the correlation ascertained at the late time as a basis for generating a tracking signal (36) for tracking the optimum sampling time.

2. Apparatus according to Claim 1, **characterized in that** the series of received, spread-coded data is a series of baseband signal values.

3. Apparatus according to Claim 2, **characterized in that** the baseband signal values are complex baseband signal values which respectively comprise an inphase signal value and a quadrature signal value.

4. Apparatus according to one of the preceding claims, **characterized in that** the means for channel estimation (11) deliver the channel impulse response (12) for the transmission channel as a set of channel coefficients ($h_0$, $h_1$, ... $h_L$).

5. Apparatus according to one of the preceding claims, **characterized in that** the tracking signal (36) tracks the optimum sampling time such that the correlation ascertained at the early time and the correlation ascertained at the late time match.

6. Apparatus according to one of the preceding claims, **characterized in that** the means for generating the tracking signal (33, 35) generate the tracking signal (36) by dividing the correlation ascertained at the early time and the correlation ascertained at the late time.

7. Apparatus according to Claim 6, **characterized in that** the optimum sampling time is shifted in a first direction if the result (34) of the division is greater than one, and **in that** the optimum sampling time is shifted in the direction opposite to the first direction if the result (34) of the division is less than one.

8. Apparatus according to one of Claims 1 to 5, **characterized in that** the means for generating the tracking signal generate the tracking signal by subtracting the correlation ascertained at the early time and the correlation ascertained at the late time.

9. Apparatus according to Claim 8, **characterized in that** the optimum sampling time is shifted in a first direction if the result of the subtraction is greater than zero, and **in that** the optimum sampling time is shifted in the direction opposite to the first direction if the result of the subtraction is less than zero.

10. Apparatus according to one of the preceding claims, **characterized in that** the early time is half a chip period ( $\dfrac{T_C}{2}$ ) in front of the current sampling time, and **in that** the late time is half a chip period ( $\dfrac{T_C}{2}$ ) behind the current sampling time.

11. Apparatus according to one of the preceding claims, **characterized in that** the sampling time at which the received, spread-coded data are sampled is a movable sampling time which is tracked in line with the tracking signal (36) in order to set optimum sampling conditions.

12. Apparatus according to one of Claims 1 to 10, **characterized in that** the apparatus for tracking the optimum sampling time has a unit (39) for linearly interpolating a series of oversampled data values (38) in the received, spread-coded data which uses linear interpolation between consecutive data values in the series of oversampled data values (38) to generate a new series (40) of data values sampled at the tracked optimum sampling time.

13. Apparatus according to Claim 12, **characterized in that** the unit (39) for linearly interpolating the received, spread-coded data generates the new series (40) of data values sampled at the tracked optimum sampling time in line with the tracking signal (36), with the tracking signal (36) stipulating the weightings which are used for linearly combining the received spread-coded data to form the data values in the new series (40).

14. Multiuser detector which has an apparatus according to one of Claims 1 to 13.

15. Mobile radio station, which has an apparatus according to one of Claims 1 to 13.

16. Mobile radio station according to Claim 15, **characterized in that** the standard used for the data transmission is the UMTS standard.

17. Method for tracking the optimum sampling time for a series of received, spread-coded data in a radio receiver, particularly in a mobile radio receiver, where the received data have been spread-coded at the transmitter end using a spreading sequence which is known at the receiver end, **characterized by** the following steps:

> a) channel estimation is performed to ascertain the channel impulse response (12) for the transmission channel using a training sequence known at the receiver end;
> b) the channel impulse response (12) ascertained in step a) is convoluted with the spreading sequence (14) known at the receiver end to generate a correlation sequence (16);
> c) the series of received data is correlated with the correlation sequence (16) generated in step b) at an early time and at a late time;
> d) a tracking signal (36) for tracking the optimum sampling time on the basis of the correlation ascertained at the early time and the correlation ascertained at the late time is generated.

18. Method according to Claim 17, **characterized in that** the channel estimation involves ascertaining the channel impulse response (12) for the transmission channel as a set of channel coefficients ($h_0$, $h_1$, ... $h_L$).

19. Method according to Claim 17 or Claim 18, **characterized in that** the tracking signal (36) for tracking the optimum sampling time is generated by dividing the correlation ascertained at the early time and the correlation ascertained at the late time.

20. Method according to Claim 17 or Claim 18, **characterized in that** the tracking signal for tracking the optimum sampling time is generated by subtracting the correlation ascertained at the early time and the correlation ascertained at the late time.

21. Method according to one of Claims 17 to 20, **characterized in that** the early time is half a chip period ( $\dfrac{T_C}{2}$ ) in front of the current sampling time, and **in that** the late time is half a chip period ( $\dfrac{T_C}{2}$ ) behind the current sampling time.

22. Method according to one of Claims 17 to 21, **characterized in that** the sampling time at which the received spread-coded data are sampled is shifted in line with the tracking signal (36) in order to set optimum sampling conditions.

23. Method according to one of Claims 17 to 21, **char-**

**acterized in that** linear interpolation between consecutive data values in the series (38) of received, spread-coded data is used to generate a new series (40) of data values sampled at the tracked optimum sampling time.

**Revendications**

1. Dispositif de détection de l'instant d'échantillonnage le meilleur pour une succession de données reçues, codées par étalement dans un récepteur radio, notamment dans un récepteur de téléphonie mobile, les données reçues ayant été codées par étalement côté émetteur par une succession d'étalement connue du côté récepteur, comprenant

> - des moyens (11) d'évaluation de canal qui déterminent, au moyen d'une séquence d'apprentissage connue du côté du récepteur, la réponse (12) impulsionnelle du canal de transmission,
> - des moyens (13) de convolution de la réponse (12) impulsionnelle de canal par la succession (14) d'étalement connue du côté émetteur,
> - des moyens (17, 18) de corrélation précoce/tardive qui corrèlent la succession de données reçues codées par étalement à un instant précoce et à un instant tardif à la succession (16) de corrélation obtenue par convolution, ainsi
> - que des moyens (33, 35) de production d'un signal d'adaptation qui produit, en fonction de la corrélation déterminée à l'instant précoce et de la corrélation déterminée à l'instant tardif, un signal (36) d'adaptation de l'instant d'échantillonnage le meilleur possible.

2. Dispositif suivant la revendication 1,
**caractérisé en ce que** la succession de données reçues codées par étalement est une succession de valeurs de signal de bande de base.

3. Dispositif suivant la revendication 2,
**caractérisé en ce que** les valeurs de signal de bande de base sont des valeurs de signal de bande de base complexes qui comprennent, respectivement, une valeur de signal en phase ainsi qu'une valeur de signal en quadrature.

4. Dispositif suivant l'une des revendications précédentes,
**caractérisé en ce que** les moyens (11) d'évaluation de canal fournissent la réponse (12) impulsionnelle du canal de transmission sous la forme d'un jeu de coefficients ($h_0$, $h_1$, ... $h_L$) de canal.

5. Dispositif suivant l'une des revendications précédentes,

**caractérisé en ce que** le signal (36) d'adaptation adapte l'instant le meilleur possible d'échantillonnage, de façon à ce que la corrélation déterminée à l'instant précoce et la corrélation déterminée à l'instant tardif coïncident.

6. Dispositif suivant l'une des revendications précédentes,
**caractérisé en ce que** les moyens (33, 35) de production du signal d'adaptation produisent le signal (36) d'adaptation par division de la corrélation déterminée à l'instant précoce et de la corrélation déterminée à l'instant tardif.

7. Dispositif suivant la revendication 6,
**caractérisé en ce que** l'instant le meilleur possible d'échantillonnage, dans le cas où le résultat (34) de la division est supérieur à un, est décalé dans un premier sens et **en ce que** l'instant le meilleur possible d'échantillonnage, dans le cas où le résultat (34) de la division est inférieure à un, est décalé dans le sens contraire au premier sens.

8. Dispositif suivant l'une des revendications 1 à 5,
**caractérisé en ce que** les moyens de production du signal d'adaptation produisent le signal d'adaptation par soustraction de la corrélation déterminée à l'instant précoce et de la corrélation déterminée à l'instant tardif.

9. Dispositif suivant la revendication 8,
**caractérisé en ce que** l'instant le meilleur possible d'échantillonnage, dans le cas où le résultat de la soustraction est supérieur à zéro, est décalé dans un premier sens et **en ce que** l'instant le meilleur possible d'échantillonnage, dans le cas où le résultat de la soustraction est inférieur à zéro, est décalé dans le sens contraire au premier sens.

10. Dispositif suivant l'une des revendications précédentes,
**caractérisé en ce que** l'instant précoce est avancé par rapport à l'instant d'échantillonnage du moment d'une demi-durée de puce $\dfrac{(TC)}{2}$ et **en ce que** l'instant tardif est repoussé par rapport à l'instant d'échantillonnage du moment d'une demi-durée de puce $\dfrac{(TC)}{2}$.

11. Dispositif suivant l'une des revendications précédentes,
**caractérisé en ce que** l'instant d'échantillonnage avec lequel les données reçues codées par étalement sont échantillonnées est un instant d'échantillonnage pouvant être décalé, qui est adapté de manière correspondante au signal (36) d'adaptation pour établir les conditions d'échantillonnage les meilleures possibles.

12. Dispositif suivant l'une des revendications 1 à 10,
**caractérisé en ce que** le dispositif d'adaptation de l'instant le meilleur possible d'échantillonnage comprend une unité (39) d'interpolation linéaire d'une succession de valeurs (38) de données sur-échantillonnées des données reçues codées par étalement, unité qui produit au moyen d'une interpolation linéaire entre les valeurs de données qui se succèdent de la succession de valeurs (38) de données sur-échantillonnées une nouvelle succession (40) de valeurs de données échantillonnées à l'instant d'échantillonnage adapté le meilleur possible.

13. Dispositif suivant la revendication 12,
**caractérisé en ce que** l'unité (39) d'interpolation linéaire des données reçues codées par étalement produit, en fonction du signal (36) d'adaptation, la nouvelle succession (40) de valeurs de données échantillonnées à l'instant adapté d'échantillonnage le meilleur possible, les pondérations par lesquelles les données reçues, codées par étalement, sont combinées linéairement aux valeurs de données de la nouvelle succession (40) étant fixées par le signal (36) d'adaptation.

14. Détecteur multi-usages, qui a un dispositif suivant l'une des revendications 1 à 13.

15. Poste de téléphonie mobile, qui a un dispositif suivant l'une des revendication 1 à 13.

16. Poste de téléphonie mobile suivant la revendication 15,
**caractérisé en ce qu'**il utilise comme norme pour la transmission de données la norme UMTS.

17. Procédé d'adaptation de l'instant d'échantillonnage le meilleur possible pour une succession de données reçues codées par étalement dans un récepteur radio, notamment dans un récepteur de téléphonie mobile, les données reçues ayant été codées par étalement du côté de l'émetteur par une succession d'étalement connue du côté du récepteur,
**caractérisé par** des stades suivants :

a) on effectue une évaluation du canal pour déterminer la réponse (12) impulsionnelle du canal de transmission à l'aide d'une séquence d'apprentissage connue du côté du récepteur ;
b) on effectue une convolution de la réponse (12) impulsionnelle de canal déterminée au stade a) par la succession (14) d'étalement connue du côté du récepteur pour produire une succession (16) de corrélation ;

c) on corrèle la succession de données reçues à la succession (16) de corrélation produite au stade b) à un instant précoce et à un instant tardif ;

d) on produit un signal (36) d'adaptation pour l'adaptation de l'instant d'échantillonnage le meilleur possible en fonction de la corrélation déterminée à l'instant précoce et de la corrélation déterminée à l'instant tardif.

**18.** Procédé suivant la revendication 17, dans lequel on détermine, dans l'évaluation de canal, la réponse (12) impulsionnelle du canal de transmission sous la forme d'un jeu de coefficients ($h_0$, $h_1$, ... $h_L$) de canal.

**19.** Procédé suivant la revendication 17 ou 18, **caractérisé en ce que** l'on produit le signal (36) d'adaptation pour l'adaptation de l'instant d'échantillonnage le meilleur possible par division de la corrélation déterminée à l'instant précoce et de la corrélation déterminée à l'instant tardif.

**20.** Procédé suivant la revendication 17 ou revendication 18, **caractérisé en ce que** l'on produit le signal d'adaptation pour l'adaptation de l'instant d'échantillonnage le meilleur possible par soustraction de la corrélation déterminée à l'instant précoce et de la corrélation déterminée à l'instant tardif.

**21.** Procédé suivant l'une des revendications 17 à 20, **caractérisé en ce que** l'instant précoce est avancé par rapport à l'instant d'échantillonnage du moment d'une demi-durée de puce $\frac{(TC)}{2}$ et **en ce que** l'instant tardif est repoussé par rapport à l'instant d'échantillonnage du moment d'une demi-durée de puce $\frac{(TC)}{2}$.

**22.** Procédé suivant l'une des revendications 17 à 21, **caractérisé en ce que** l'on décale, en fonction du signal (36) d'adaptation, l'instant d'échantillonnage avec lequel les données reçues codées par étalement sont échantillonnées pour le réglage de conditions d'échantillonnage les meilleures possibles.

**23.** Procédé suivant l'une des revendications 17 à 21, **caractérisé en ce que** l'on produit, au moyen d'une interpolation linéaire entre des valeurs de données qui se succèdent de la succession (38) de données reçues codée par étalement, une nouvelle succession (40) de valeurs de données échantillonnées pour l'adaptation de l'instant d'échantillonnage le meilleur possible.

Fig. 1

5

| $\underline{6}$ | $\underline{7}$ | $\underline{6}$ |
|---|---|---|

Fig. 2

Korrelation

relative Verschiebung

$E_2$ $E_1$ $P_2$ $P_1$ $L_2$ $L_1$

Fig. 3